# EUROPEAN PATENT SPECIFICATION

(11) **EP 4 137 957 B1**
(45) Date of publication and mention of the grant of the patent: **02.12.2026**
(21) Application number: 21803105.2
(22) Date of filing: 17.03.2021
(51) Int. Cl.: G06F 16/176, G06F 16/182

(54) **FILE SHARING METHOD AND TERMINAL DEVICE**
DATEITEILUNGSVERFAHREN UND ENDGERÄTEVORRICHTUNG
PROCÉDÉ DE PARTAGE DE FICHIERS ET DISPOSITIF TERMINAL

(30) Priority: 15.05.2020 CN 202010414299; 25.12.2020 CN 202011565581
(43) Date of publication of application: 22.02.2023
(73) Proprietor: Huawei Technologies Co., Ltd., Longgang District, Shenzhen, Guangdong 518129 (CN)
(72) Inventor: CHEN, Xi, Shenzhen, Guangdong 518129 (CN)
(74) Representative: Gill Jennings & Every LLP
(86) International application number: PCT/CN2021/081199
(87) International publication number: WO 2021/227646

(56) References cited:
- EP-A1- 2 631 825
- WO-A1-2016/160144
- CN-A- 104 602 133
- CN-A- 104 750 372
- CN-A- 106 778 245
- CN-A- 109 144 657
- CN-A- 109 299 047
- US-A1- 2014 267 567
- US-A1- 2016 219 058

## Description

### TECHNICAL FIELD

Embodiments of this application relate to the field of terminal technologies, and in particular, to a file sharing method and a terminal device.

### BACKGROUND

Before an application (application, app) deployed in a terminal device accesses a local file stored in the terminal device, the application may request a system kernel of the terminal device to open (open) the local file, to obtain a file descriptor (file descriptor, FD) returned by the system kernel to the application. In addition, the system kernel may create a file structure of the local file, and maintain a mapping relationship between a file descriptor and the file structure in a file descriptor table corresponding to the application, where the file structure of the local file may represent a local file in an open state. In a process in which the application accesses the local file, for example, in a process in which the application reads (reads)/and writes (writes) the local file, the application may provide a corresponding file descriptor for the system kernel. The system kernel may find the corresponding file structure based on the file descriptor and the file descriptor table corresponding to the application, that is, find the local file in the open state, and then perform an access operation on the corresponding local file based on the found file structure, to complete access of the application to the local file.
US 2016/219058 A1 describes a file sharing system may comprise a server configured to store a sharing file having one or more versions and an identifier of the sharing file, receive the sharing file and the identifier of the sharing file from one or more devices, and determine a version of the received sharing file corresponding to the identifier of the sharing file by using a hash value of the sharing file and a time editing the sharing file. A file sharing method may comprise sending, by a server, one or more messages associated with a sharing file to one or more devices which store the sharing file and have authorization to access the messages associated with the sharing file.

Because different terminal devices have own system kernels and memories, an application deployed in one terminal device cannot directly access a local file stored in another terminal device.

### SUMMARY

The present invention is defined by the appended claims. Embodiments of this application provide a file sharing method and a terminal device, so that a second application can access a target file shared by a first application with the second application, where the first application is deployed in a first terminal device, the second application is deployed in a second terminal device, and the target file is a local file stored in the first terminal device.

According to a first aspect, an embodiment of this application provides a file sharing method, applied to a first terminal device, where a first distributed file service is deployed in the first terminal device. The method includes: A target file is first opened, where the target file is a local file that is stored in the first terminal device and that is to be shared with a second terminal device, and the first terminal device and the second terminal device belong to a same distributed file system. Then, metadata of a mapping file corresponding to the target file is created in the distributed file system, where the metadata of the mapping file includes a file identifier and an index identifier of the mapping file. Then, a first file descriptor used to access the target file in an open state is generated for the first distributed file service, and an association relationship between the first file descriptor and the index identifier is established. Then, file sharing information including the file identifier is sent to the second terminal device.

According to a second aspect, an embodiment of this application provides a file sharing method corresponding to the first aspect, applied to a second terminal device, where a second distributed file service is deployed in the second terminal device. The method includes: File sharing information from a first terminal device is received, where the first terminal device and the second terminal device belong to a same distributed file system, the file sharing information includes a file identifier of a mapping file that is in the distributed file system and that corresponds to a target file, and the target file is a local file that is stored in the first terminal device and that is to be shared with the second terminal device. Then, the mapping file is opened based on the file identifier. Then, a second file descriptor used to access the mapping file in an open state is generated for a second application, and the second file descriptor is provided for the second application.

With reference to the first aspect and the second aspect, when a user expects to use the second application to access the target file, the second distributed file service may first receive a second file access request of the second application for the mapping file in the open state, where the second file access request includes a request parameter and the second file descriptor; and then send a first file access request to the first terminal device, where the first file access request includes a request parameter and the index identifier of the mapping file, and the index identifier is obtained from the metadata of the mapping file based on the file identifier. The first distributed file service may correspondingly receive the first file access request from the second terminal, then query, based on the index identifier, the association relationship established in the first terminal device, determine the first file descriptor used to access the target file in the open state, and access the target file in the open state based on the request parameter and the first file descriptor. In this way, the second application can complete, by accessing the mapping file in the open state, cross-device access to the target file stored in the first terminal device.

According to a third aspect, an embodiment of this application provides a file sharing method, applied to a first terminal device, where a first distributed file service is deployed in the first terminal device. The method includes: A target file is first opened, where the target file is a local file that is stored in the first terminal device and that is to be shared with a second terminal device, and the first terminal device and the second terminal device belong to a same distributed file system. Then, a temporary identifier is generated, and an association relationship between the temporary identifier and the target file in an open state is established. Then, file sharing information including the temporary identifier is sent to the second terminal device.

According to a fourth aspect, an embodiment of this application provides a file sharing method corresponding to the third aspect, applied to a second terminal device, where a second distributed file service is deployed in the second terminal device. The method includes: File sharing information from a first terminal device is first received, where the first terminal device and the second terminal device belong to a same distributed file system, the file sharing information includes a temporary identifier, an association relationship between the temporary identifier and a target file in an open state is established in the first terminal device, and the target file is a local file that is stored in the first terminal device and that is to be shared with the second terminal device. Then, the temporary file in the open state is created in the second terminal device. Then, a second file descriptor used to access the temporary file in the open state is generated for the second application, and the second file descriptor and the temporary identifier are provided for the second application.

With reference to the third aspect and the fourth aspect, when a user expects to use the second application to access the target file, the second distributed file service may first receive a second file access request of the second application for the temporary file in the open state, where the second file access request includes the second file descriptor, the temporary identifier, and a request parameter; and then send a first file access request to the first terminal device, where the first file access request includes the request parameter and the temporary identifier. The first distributed file service may correspondingly receive the first file access request from the second terminal device, then query the association relationship based on the temporary identifier to determine the target file in the open state, and access the target file in the open state based on the request parameter. In this way, the second application can complete, by accessing the temporary file in the open state, cross-device access to the target file stored in the first terminal device.

According to a fifth aspect, a file sharing apparatus is provided, used in a first terminal device, where a first distributed file service is deployed in the first terminal device. The apparatus includes: a local file management unit, configured to open a target file, where the target file is a local file that is stored in the first terminal device and that is to be shared with a second terminal device, and the first terminal device and the second terminal device belong to a same distributed file system; a distributed file management unit, configured to create, in the distributed file system, metadata of a mapping file corresponding to the target file, where the metadata of the mapping file includes a file identifier and an index identifier of the mapping file; a file descriptor transferring unit, configured to: generate, for the first distributed file service, a first file descriptor used to access the target file in an open state, and establish an association relationship between the first file descriptor and the index identifier; and a data sending unit, configured to send file sharing information to the second terminal device, where the file sharing information includes the file identifier. The first distributed file service is used to: receive a first file access request from the second terminal, where the first file access request includes a request parameter and the index identifier; query the association relationship based on the index identifier, to determine the first file descriptor; and access the target file in the open state based on the request parameter and the first file descriptor.

According to a sixth aspect, an embodiment of this application provides a file sharing apparatus corresponding to the fifth aspect, used in a second terminal device, where a second distributed file service is deployed in the second terminal device. The apparatus includes: a data transceiver unit, configured to receive file sharing information from a first terminal device, where the first terminal device and the second terminal device belong to a same distributed file system, the file sharing information includes a file identifier of a mapping file that is in the distributed file system and that corresponds to a target file, and the target file is a local file that is stored in the first terminal device and that is to be shared with the second terminal device; a file opening unit, configured to open the mapping file based on the file identifier; and a file descriptor transferring unit, configured to generate, for a second application, a second file descriptor used to access the mapping file in an open state, and provide the second file descriptor for the second application. The second distributed file service is used to: receive a second file access request of the second application for the mapping file in the open state, where the second file access request includes a request parameter and the second file descriptor; and send a first file access request to the first terminal device, where the first file access request includes the request parameter and an index identifier of the mapping file, and the index identifier is obtained from metadata of the mapping file based on the file identifier.

According to a seventh aspect, a file sharing apparatus is provided, used in a first terminal device, where a first distributed file service is deployed in the first terminal device. The apparatus includes: a local file management unit, configured to open a target file, where the target file is a local file that is stored in the first terminal device and that is to be shared with a second terminal device, and the first terminal device and the second terminal device belong to a same distributed file system; an association relationship management unit, configured to generate a temporary identifier, and establish an association relationship between the temporary identifier and the target file in an open state; and a data transceiver unit, configured to send file sharing information to the second terminal device, where the file sharing information includes the temporary identifier. The first distributed file service is used to: receive a first file access request from the second terminal device, where the first file access request includes a request parameter and the temporary identifier; query the association relationship based on the temporary identifier, to determine the target file in the open state; and access the target file in the open state based on the request parameter.

According to an eighth aspect, an embodiment of this application provides a file sharing apparatus corresponding to the seventh aspect, used in a second terminal device, where a second distributed file service is deployed in the second terminal device. The apparatus includes: a data transceiver unit, configured to receive file sharing information from a first terminal device, where the first terminal device and the second terminal device belong to a same distributed file system, the file sharing information includes a temporary identifier, an association relationship between the temporary identifier and a target file in an open state is established in the first terminal device, and the target file is a local file that is stored in the first terminal device and that is to be shared with the second terminal device; a file management unit, configured to create, in the second terminal device, a temporary file in the open state; and a file descriptor transferring unit, configured to generate, for a second application, a second file descriptor used to access the temporary file in the open state, and provide the second file descriptor and the temporary identifier for the second application. The second distributed file service is used to: receive a second file access request of the second application for the temporary file in the open state, where the second file access request includes the second file descriptor, the temporary identifier, and a request parameter; and send a first file access request to the first terminal device, where the first file access request includes the request parameter and the temporary identifier.

According to a ninth aspect, a terminal device is provided, including a memory and a processor. The memory stores computer program instructions/code, and when executing the computer program instructions/code, the processor implements the method according to any one of the first aspect to the fourth aspect.

According to a tenth aspect, a computer-readable storage medium is provided, configured to store computer program instructions/code. When a processor of a terminal device executes the computer program instructions/code, the terminal device is enabled to implement the method according to any one of the first aspect to the fourth aspect.

According to an eleventh aspect, a computer program product is provided. The computer program product includes computer program instructions/code, and when the computer program instructions/code are/is run on a computer, the computer is enabled to perform the method according to any one of the first aspect to the fourth aspect.

In the foregoing aspects, the first distributed file service can send a metadata synchronization message to the second terminal device, where the metadata synchronization message includes metadata of the mapping file.

In the foregoing aspects, the first terminal device may further send a file sharing request to the second terminal device, where the file sharing request includes a global identifier of the target file, and the global identifier is a unique identifier of the target file in the first terminal device. The second terminal device can provide the file sharing request for the second application, and send a file sharing response including the global identifier to the second terminal device in response to a trigger operation performed by the user on the global identifier through the second application. Correspondingly, the first terminal device may open the target file in response to the file sharing response from the second terminal device. In this way, the user can access the target file on demand through the second application based on a service requirement of the user.

In the foregoing aspects, the file sharing request can further include a first application identifier of the first application. The first application is deployed in the first terminal device and has permission to access the target file, and the first application identifier is a unique identifier of the first application in the first terminal device. Correspondingly, the file sharing response sent by the second terminal device can further include the first application identifier. Therefore, the first terminal device can open the target file through the first application in response to the file sharing response that is from the second terminal device and that includes the global identifier and the first application identifier. In other words, the target file is opened through the first application that has permission to access the target file, so as to ensure that the second application can access the target file in the open state in a subsequent process.

In the foregoing aspects, the global identifier of the target file includes a uniform resource locator URI of the target file. The URI of the target file may specifically include a file information field. The file information field is a storage path of the target file or a mapping character string corresponding to the storage path.

In the foregoing aspects, the URI of the target file may further include a device information field. The device information field is a device identifier of the first terminal device or a mapping character string corresponding to the device identifier.

In the foregoing aspects, the URI of the target file further includes an application information field. The application information field specifically includes the first application identifier of the first application or a mapping character string corresponding to the first application identifier.

In the foregoing aspects, the file sharing request further includes a second application identifier of the second application. The second application is deployed in the second terminal device, and the second application identifier is a unique identifier of the second application in the second terminal device.

### BRIEF DESCRIPTION OF DRAWINGS

The following briefly describes the accompanying drawings that need to be used in the descriptions of embodiments.
FIG. 1 is a schematic diagram 1 of sharing a target file by different terminal devices according to an embodiment of this application;
FIG. 2 is a schematic diagram 2 of sharing a target file by different terminal devices according to an embodiment of this application;
FIG. 3A and FIG. 3B are a flowchart of a file sharing method according to an embodiment of this application;
FIG. 4a is an example 1 of a graphical user interface displayed by a terminal device according to an embodiment of this application;
FIG. 4b is an example 2 of a graphical user interface displayed by a terminal device according to an embodiment of this application;
FIG. 4c is an example 3 of a graphical user interface displayed by a terminal device according to an embodiment of this application;
FIG. 5A and FIG. 5B are a flowchart of another file sharing method according to an embodiment of this application;
FIG. 6 is a schematic diagram 1 of a file sharing apparatus according to an embodiment of this application;
FIG. 7 is a schematic diagram 2 of a file sharing apparatus according to an embodiment of this application;
FIG. 8 is a schematic diagram 3 of a file sharing apparatus according to an embodiment of this application;
FIG. 9 is a schematic diagram 4 of a file sharing apparatus according to an embodiment of this application; and
FIG. 10 is a schematic diagram of a structure of a terminal device according to an embodiment of this application.

### DESCRIPTION OF EMBODIMENTS

The following describes the technical solutions in embodiments of this application with reference to the accompanying drawings in embodiments of this application.

In embodiments of this application, the term "and/or" is merely used to describe an association relationship between associated objects and indicates that three relationships may exist. For example, "A and/or B" may indicate the following three cases: Only A exists, only B exists, and both A and B exist. The term "a plurality of" means two or more, and "several" means one or more, unless otherwise specified. The terms "include", "have", and their variants all mean "include but are not limited to", unless otherwise specifically emphasized in another manner. Terms "first" and "second" are used only for a purpose of description, and shall not be construed as indicating or implying relative importance or implying a quantity of indicated technical features. Therefore, a feature restricted by "first" or "second" may explicitly indicate or implicitly include one or more such features.

In embodiments of this application, the word "example", "for example" or the like is used to represent giving an example, an illustration, or a description, and is intended to present a related concept in a specific manner. Any embodiment or design scheme described as an "example" or "for example" should not be explained as being more preferable or having more advantages than another embodiment or design scheme.

In embodiments of this application, a terminal device may be a mobile phone, a television, an acoustic system, a wearable device, a tablet computer, a personal digital assistant (personal digital assistant, PDA), a laptop computer (laptop), a mobile computer, an augmented reality (augmented reality, AR) device, a virtual reality (virtual reality, VR) device, an artificial intelligence (artificial intelligence, AI) device, or the like.

In terms of a hardware structure, the terminal device may include at least a memory and a processor. The terminal device may further include a module/unit configured to support the terminal device in exchanging information with the outside, such as a display, a camera, a communication interface, and a sensor.

In terms of a software structure, a software system of the terminal device may use a layered architecture, an event-driven architecture, a microkernel architecture, or a cloud architecture. For example, the terminal device uses a software system of a layered architecture. Generally, the software system of the layered architecture may be divided into four layers: an application layer, an application framework layer, a system library and an Android runtime (Android runtime), and a kernel layer from top to bottom. Each layer has a clear role and division of labor, and the layers communicate with each other through a software interface.

The application layer includes an application deployed in the terminal device. For example, the application layer includes but is not limited to a desktop launcher (Launcher), a file manager, a file editor, and the like.

The application framework layer may provide an application programming interface (application programming interface, API) and a programming framework for an application, and may further include some predefined function modules/services.

The system library and the Android runtime, the kernel layer, and the like may be referred to as an underlying system. The underlying system includes a function module and a hardware driver that are configured to provide display and file management services, for example, includes a surface manager (surface manager) located in the system library and a display driver located at the kernel layer.

The runtime is responsible for scheduling and managing the entire software system, and includes a core library and a virtual machine. Computer programs at the application layer and the application framework layer are run on the virtual machine. Specifically, the virtual machine may execute Java files of the application layer and the application framework layer as binary files.

The system library may further include a plurality of function modules in addition to the surface manager, for example, a status monitoring service, a media library (Media Library), a three-dimensional graphics engine (for example, OpenGL for Embedded Systems), and a two-dimensional graphics engine.

The kernel layer is a layer between hardware and software. The kernel layer includes several hardware drivers and provides process management, file management, system security permission management, and communication between the system and a hardware device. For example, the kernel layer may include a display driver, a camera driver, an audio driver, a touch driver, and several local file systems.

The local file system is configured to organize and allocate a storage resource of the terminal device, and manage a local file stored in the memory. For example, the local file system may be responsible for creating, reading, and modifying the local file. In addition, the local file system may include but is not limited to a Linux file system such as Ext2, Ext3, Ext4, or Fuse.

The technical solutions provided in embodiments of this application are applicable to the following service scenario: A first application shares a target file with a second application, the first application is deployed in a first terminal device, the second application is deployed in a second terminal device, and the target file is a local file or a distributed file stored in the first terminal device.

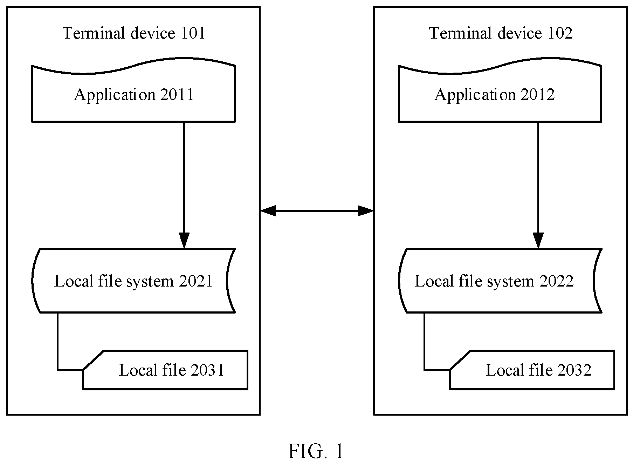

Generally, different terminal devices have own system kernels and memories. The second application deployed in the second terminal device cannot directly access the local file stored in the first terminal device. As shown in FIG. 1, when a first application (an application 2011) requests to share a target file (a local file 2031) in a local file system 2021 with a second application (an application 2012), a first terminal device (a terminal device 101) needs to send file content of the local file 2031 to the second terminal device (a terminal device 102). The terminal device 102 creates and stores, in a local file system 2022 of the terminal device 102, a local file 2032 including the file content. The application 2012 may access the local file 2032.

The technical solutions provided in embodiments of this application are intended to implement direct cross-device access to the target file.

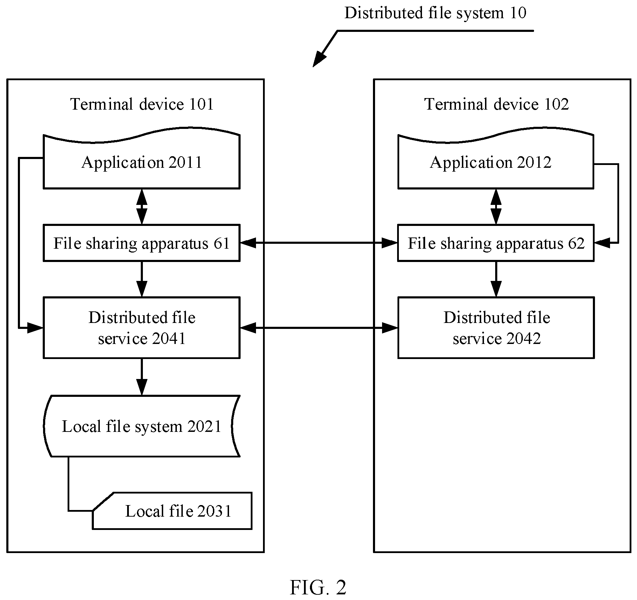

FIG. 2 is a schematic diagram of sharing a target file by different terminal devices according to an embodiment of this application. As shown in FIG. 2, a distributed file system 10 includes the terminal device 101 and the terminal device 102. A distributed file service 2041 is deployed in the terminal device 101, and a distributed file service 2042 is deployed in the terminal device 102. A distributed file service may be located at an application layer or a kernel layer of a software system of a terminal device.

In the distributed file system 10, metadata of each distributed file may be stored on a terminal device, and the metadata of each distributed file is synchronized between different terminal devices on demand or on time. Alternatively, the distributed file system 10 further includes a master server (master server)/name node (name node). Metadata of each distributed file is stored in the master server, and the terminal device obtains the metadata of the distributed file from the master server/name node on demand or on time.

The distributed file system 10 may include a PVFS (parallel virtual file system), a Lustre file system, a Panfs (panasas file system), a GoogleFS (google file system), or other various types of centralized or decentralized distributed file systems, or improvements made to the foregoing example distributed file systems.

A file sharing apparatus 61 may be deployed in the terminal device 101, and a file sharing apparatus 62 may be deployed in the terminal device 102, so that the terminal device 101 and the terminal device 102 can cooperate with each other based on the distributed file service deployed by the terminal device 101 and the distributed file service deployed by the terminal device 102, to support cross-device access of the application 2012 to the local file 2031.

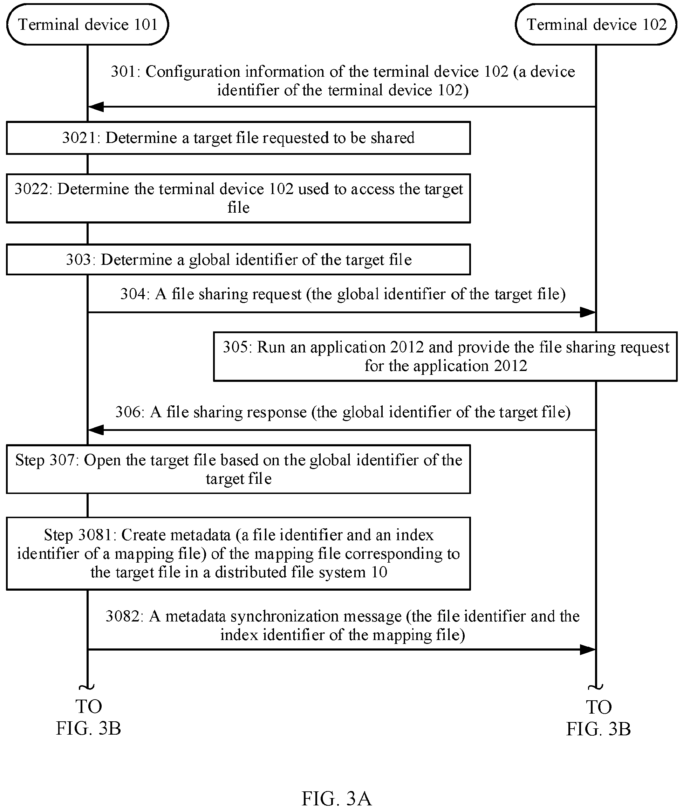

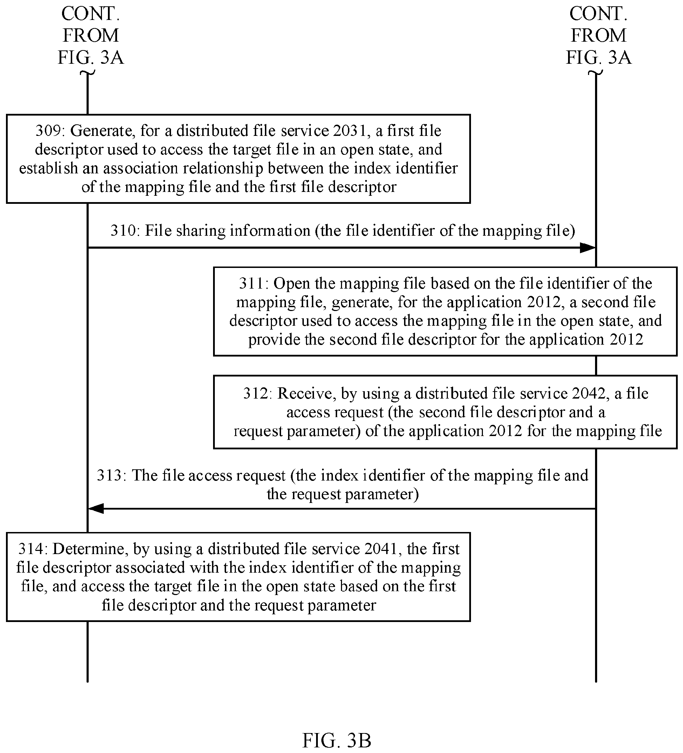

Based on a system framework shown in FIG. 2, an embodiment of this application provides a file sharing method. As shown in FIG. 3A and FIG. 3B, the method may include but is not limited to some or all steps shown in FIG. 3A and FIG. 3B.

Step 301: The terminal device 101 obtains configuration information of the terminal device 102.

The terminal device 101 may receive the configuration information of the terminal device 102 from the terminal device 102. Similarly, the terminal device 101 may send configuration information of the terminal device 101 to another terminal device in the distributed file system 10.

The configuration information of the terminal device 102 includes at least a device identifier of the terminal device 102. The device identifier of the terminal device 102 may be specifically an internet protocol (internet protocol, IP) address or a media access control address (media access control address, MAC) of the terminal device 102.

In some embodiments, the configuration information of the terminal device 102 may further include respective application identifiers of several applications deployed in the terminal device 102. The application identifier of the application may be specifically a name of an installation package of the application or a unique identifier allocated to the application. In addition, for any application deployed in the terminal device 102, if the application has permission to access a distributed file, that is, the application has permission to invoke the distributed file service 2042, the configuration information of the terminal device 102 includes an application identifier of the application.

Step 3021: The terminal device 101 determines the local file 2031 as a to-be-shared target file.

Step 3022: The terminal device 101 determines the terminal device 102 used to access the target file.

In some embodiments, the terminal device 101 runs the application 2011, and displays a graphical user interface of the application 2011. A user may perform a service operation on the graphical user interface. A file sharing apparatus 61 deployed in the terminal device 101 determines, based on the service operation performed by the user on the graphical user interface, the to-be-shared target file and the terminal device 102 used to access the target file.

For example, the terminal device 101 may be a mobile phone, and the terminal device 102 may be a tablet computer. The application 2011 may be a file manager, and the application 2012 may be a file editor. The file manager has permission to access both local files whose file names are "file 1" and "file 2", and the user expects to share the local file 2031 whose file name is "file 1" in the mobile phone with a file editor in the tablet computer, and edit the local file 2031 through the file editor in the tablet computer.

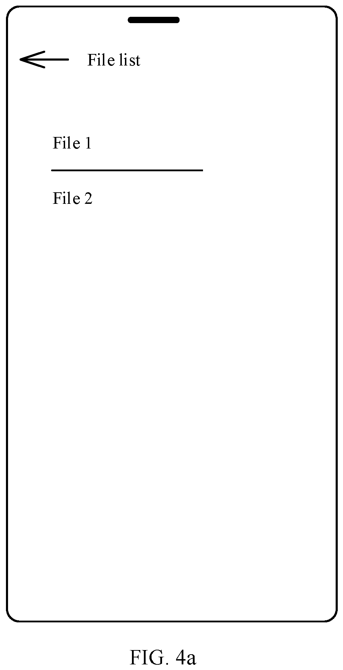

First, the mobile phone may display, through the file manager, a graphical user interface shown in FIG. 4a. The user may continuously press an area in which the words"file 1" are located, so that the local file 2031 whose file name is "file 1" is determined as the to-be-shared target file.

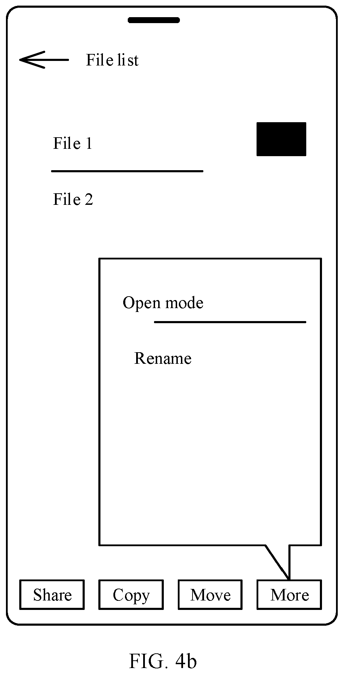

Then, the terminal device 101 displays a graphical user interface shown in FIG. 4b. The graphical user interface may not only display each local file in a list and indicate the determined target file, but also display icons or words used to support various specific types of management on the target file, for example, a "Share" icon used to support sharing of a target file to another user in a specified communication manner, a "Copy" icon used to support copying of the target file, a "Move" icon used to move the target file to change a storage path of the target file, and words "Open mode" and "Rename" under the "More" list item. The word "Rename" is used to support modification of a file name of the target file, and the word "Open mode" is used to support to initiate sharing of the target file.

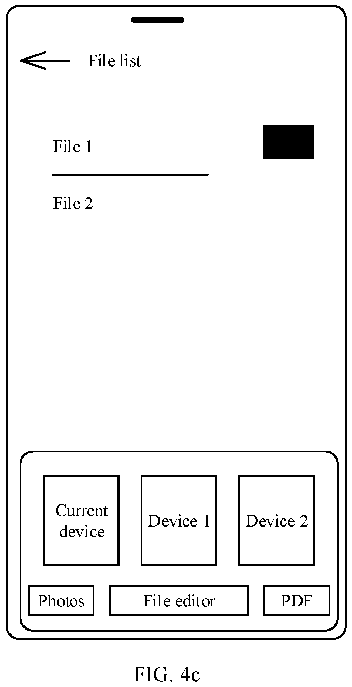

Then, the user may touch/press the words "Open mode", so that the terminal device displays a graphical user interface shown in FIG. 4c. It is assumed that among the current device, a device 1, and a device 2 displayed on the graphical user interface, the device 1 represents a device name of the tablet computer. A device name of a terminal device corresponds to a device identifier of the terminal device. Based on the assumption, the user may press/touch an area in which the words "device 1" are located, so that the tablet computer is determined as the terminal device 102 used to access the target file.

When the configuration information of the terminal device 102 includes several application identifiers, similar to the foregoing determining the terminal device 102 used to access the target file, after the user selects the "device 1" as the terminal device 102 used to access the target file, the graphical user interface shown in FIG. 4c may further correspondingly display application identifiers included in the configuration information of the "device 1", for example, "Photo", "File editor", and "PDF". The user may further touch/press an area in which the "File editor" is located, so that the "File editor" deployed in the tablet computer is determined as the application 2012 used to access the target file.

It should be noted that FIG. 4a, FIG. 4b, and FIG. 4c are graphical user interfaces merely used to assist in describing the technical solutions provided in embodiments of this application, and used to support determining of the to-be-shared target file and the terminal device 102 used to access the target file, and may further have another layout and another interface switch relationship. In addition, step 3021 may be performed first, and then step 3022 is performed. For example, an icon associated with the file sharing apparatus 61 may be set in a graphical user interface of the application 2011. A user may touch/press the icon in the graphical user interface, so that the terminal device 101 displays another graphical user interface with support of the file sharing apparatus 61. The user may perform a corresponding service operation in the another graphical user interface, so that the terminal device 101 determines the to-be-shared target file, the terminal device 102 used to access the target file, the application 2012 used to access the target file, and the like.

When the configuration information of the terminal device 102 includes several application identifiers, similar to the foregoing determining the terminal device 102 used to access the target file, the terminal device 101 may further display an application selection interface by using the file sharing apparatus 61, and determine, based on an application selection operation performed by the user on the application selection interface, the application 2012 used to access the target file. The application selection interface may display application identifiers included in the configuration information of the terminal device 102.

Step 303: The terminal device 101 determines a global identifier of the target file. The global identifier of the target file is a unique identifier of the target file in the terminal device 101, and is used to support searching for the target file.

In some embodiments, the global identifier of the target file may be a storage path of the target file or a mapping character string corresponding to the storage path.

In some embodiments, the global identifier of the target file may be a URI of the target file. The URI of the target file is at least a character string used to identify a name/location of the target file in the terminal device 101.

For example, the URI of the target file specifically includes a device information field and a file information field.

For example, the URI of the target file specifically includes the device information field, an application information field, and the file information field.

In the foregoing examples, the file information field may be the storage path of the target file or the mapping character string corresponding to the storage path.

In the foregoing examples, the device information field may be a device identifier of the terminal device 101, or a mapping character string corresponding to the device identifier. The device identifier of the terminal device 101 may be specifically an IP address of the terminal device 101, or another identifier that is obtained based on the IP address/MAC address of the terminal device 101 and that can be parsed by a domain name system (domain name system, DNS).

In the foregoing examples, the application information field may be an application identifier of the application 2011 that requests to share the target file, or a mapping character string corresponding to the application identifier.

Based on the foregoing examples, the URI of the target file may further include a protocol identifier (for example, http, ftp, mailto, or file). Another terminal device including the terminal device 102 may perform an access operation on the target file based on the protocol identifier included in the URI of the target file according to a corresponding communication protocol.

Step 304: The terminal device 101 sends a file sharing request to the terminal device 102.

The file sharing request includes the global identifier of the target file.

If the terminal device 101 determines that the application 2012 is an application used to access the shared file, the file sharing request may further include an application identifier of the application 2012.

The terminal device 101 may complete the foregoing step 301 to step 304 with support of the file sharing apparatus 61.

After receiving the file sharing request, the terminal device 102 performs step 305 of running the application 2012 and providing the file sharing request for the application 2012.

The application 2012 used to access the target file may be determined by the terminal device 101.

The application 2012 used to access the target file may be autonomously selected by the user holding the terminal device 102, or may be predetermined by the terminal device 102.

In other words, the file sharing apparatus 62 in the terminal device 10 may trigger, based on the application identifier of the application 2012 included in the file sharing request received by the file sharing apparatus 62, based on the application identifier of the application 2012 preset by the file sharing apparatus 62, or based on the application identifier of the application 2012 selected by the user, the terminal device 102 to start and run the application 2012. Then, the file sharing apparatus 62 may provide the file sharing request for the application 2012 based on the application identifier of the application 2012. Finally, the global identifier that is of the target file and that is included in the file sharing request is presented on a graphical user interface of the application 2012. In this way, the user can learn one or more pieces of information such as the terminal device that requests to share the target file with the user, the application that requests to share the target file with the user, and the target file that needs to be shared. In addition, the user can further perform, on the graphical user interface of the application 2012, a trigger operation on the global identifier of the target file, for example, touch/tap, on the graphical user interface, an area in which the global identifier is located, to make a response to the file sharing request from the terminal device 101.

With support of the file sharing apparatus 62, the terminal device 102 may perform step 306 of sending, in response to the trigger operation by the user on the global identifier of the target file, a file sharing response to the terminal device 101.

The file sharing response includes the global identifier of the target file.

With support of the file sharing apparatus 61, in response to the file sharing response from the terminal device 102, the terminal device 101 performs step 307 of opening the target file based on the global identifier of the target file.

In some embodiments, the terminal device 101 parses, by using the file sharing apparatus 61, the global identifier from the terminal device 102, determines, based on the application information field in the global identifier, the application 2011 that requests to share the target file, and finds, based on the file information field in the global identifier, the target file stored in the terminal device 101. Then, the file sharing apparatus 61 triggers the application 2011, so that the application 2011 requests a system kernel of the terminal device 101 to open the target file.

The system kernel of the terminal device 101 may create a file structure of the target file based on a file open request of the application 2011 for the target file. The file structure of the target file represents the target file in an open state.

It should be noted that, if the target file is an internal file of the application 2011, the target file may be first converted, based on the application information field in the global identifier of the target file, from the internal file of the application 2011 into a public file that can be accessed by another application, and then the application 2011 opens the target file converted into the public file. For example, the terminal device 101 uses an Android-based software system, and may convert the internal file of the application 2011 into the public file by using a provider mechanism provided by the terminal device 101.

Then, the terminal device 101 performs step 3081 of creating, in the distributed file system 10 through the distributed file service 2041, metadata of a mapping file corresponding to the target file.

Specifically, the file sharing apparatus 61 in the terminal device 101 may invoke the distributed file service 2041, to create, in the distributed file system 10, the metadata of the mapping file corresponding to the target file.

The metadata of the mapping file may include a file identifier of the mapping file in the distributed file system 10, and an index identifier (or referred to as a handle) used to support access to the mapping file. The metadata of the mapping file may further include the device identifier of the terminal device 101.

The file identifier of the mapping file may include a path of the mapping file in a directory tree of the distributed file system 10. For example, in the directory tree of the distributed file system, a root directory is "AA", and the root directory "AA" includes a first-level subdirectory "BB". When creating the metadata of the mapping file, the terminal device 101 creates a second-level subdirectory "CC" under the first-level subdirectory "BB". In this case, the file identifier of the mapping file may be "AA/BB/CC".

The directory tree of the distributed file system may be maintained by the user, that is, the file identifier of the distributed file may be created or modified by the user. Therefore, the file identifier of the distributed file is usually not used as a unique identifier of the distributed file. When the file identifier of the mapping file is maintained in the distributed file system 10, the distributed file service 2041 may allocate an index identifier to the mapping file according to a predetermined policy. The index identifier is a unique identifier of the mapping file in the distributed file system.

In this way, for an application on a user side, the file access request for accessing the mapping file may be initiated to the distributed file service based on the file identifier of the mapping file. For the distributed file system 10, the distributed file service 2042 may access the mapping file based on the index identifier of the mapping file.

It should be noted that, after the metadata of the mapping file corresponding to the target file is created, file content of the mapping file is not actually written into the distributed file system 10. Instead, in a subsequent process, the index identifier of the mapping file is associated with the target file in the open state, so that file content of the target file in the open state is used as the file content of the mapping file. In this way, when the application accesses the mapping file, the target file is essentially accessed.

Then, the terminal device 102 performs step 3082 of receiving a metadata synchronization message.

The metadata synchronization message includes the metadata of the mapping file corresponding to the target file.

Depending on different architectures of the distributed file system 10, specific implementation processes of step 3081 and step 3082 may be different.

In an example, the terminal device 101 manages metadata of the distributed file. In step 3081, the distributed file service 2041 may independently create the metadata of the mapping file corresponding to the target file, and send the metadata of the mapping file to the distributed file service 2042.

In an example, the terminal device 101 is used only as a data node configured to store a distributed file in the distributed file system 10, and the master server manages metadata of the distributed file in a unified manner. In step 3081, the distributed file service 2041 may exchange information with the master server/another terminal device to create the metadata of the mapping file corresponding to the target file in the master server. In step 3082, the distributed file service 2042 may receive the metadata synchronization message from the master server/the another terminal device.

Then, the terminal device 101 performs step 309 of generating, for the distributed file service 2041, a first file descriptor used to access the target file in the open state, and establishing an association relationship between the first file descriptor and the index identifier.

Specifically, a file descriptor table of the distributed file service 2041 may be searched for to learn of a file descriptor occupied by the distributed file service 2041. Then, a first file descriptor that is not occupied by the distributed file service 2041 is generated. Finally, the association relationship between the first file descriptor and the file structure of the target file is established in the file descriptor table, and the first file descriptor is returned to the distributed file service 2041, so as to generate, for the distributed file service 2041, the first file descriptor used to access the target file in the open state.

Then, the terminal device 101 performs step 310 of sending file sharing information to the terminal device 102.

The file sharing information may include the file identifier of the mapping file.

In some embodiments, the file sharing information may further include the application identifier of the application 2012.

The terminal device 102 may receive the file sharing information by using the file sharing apparatus 62, and perform step 311 of opening the mapping file based on the file identifier of the mapping file, generating, for the application 2012, a second file descriptor used to access the mapping file in the open state, and providing the second file descriptor for the application 2012.

Specifically, first, the file sharing apparatus 62 may receive the file sharing information from the terminal device 101. Then, the file sharing apparatus 62 invokes, based on the file identifier of the mapping file, the distributed file service 2042 to open the mapping file. Then, the second file descriptor used to access the mapping file in the open state is generated for the application 2012 by using a method similar to the foregoing method of generating, for the distributed file service 2041, the first file descriptor used to access the target file in the open state. In this way, the application 2012 may access the mapping file in the open state based on the second file descriptor. Because the file content of the mapping file is essentially the file content of the target file in the open state, when the application 2012 accesses the mapping file, the target file is essentially accessed, that is, the local file 2031 stored in the terminal device 101 is essentially accessed.

It should be noted that, when the terminal device opens the mapping file, the distributed file service 2042 may determine the index identifier of the mapping file from the metadata of the mapping file based on the file identifier of the mapping file. Then, the terminal device 102 performs step 312 of receiving, by using the distributed file service 2042, a file access request from the application 2012 for the mapping file in the open state.

The file access request includes the second file descriptor and a corresponding request parameter. The request parameter may include a file access type or type indication information used to indicate the file access type, for example, include "read" or "write", or include type indication information used to indicate that the file access type is "read" or "write". When the file access type is "write", the request parameter may further include to-be-written file content.

The terminal device 102 then performs step 313 of sending a file access request to the terminal device 101 by using the distributed file service 2042. The file access request includes the index identifier of the mapping file and the request parameter included in the file access request from the application 2012.

The terminal device 101 receives the file access request from the distributed file service 2042 by using the distributed file service 2041, and then performs step 314 of determining, by using the distributed file service 2041, the first file descriptor associated with the index identifier of the mapping file, and accessing the target file in the open state based on the first file descriptor and the request parameter.

Specifically, the distributed file service 2041 may determine, from the established association relationship based on the index identifier of the mapping file included in the file access request, the first file descriptor used to access the target file in the open state. Then, an interface function corresponding to the file access type in the system kernel is invoked based on the file access type and the first file descriptor that are included in the request parameter. The interface function is used to find the file structure of the target file from the file descriptor table of the distributed file service 2041 based on the first file descriptor. Then, an access operation is performed on the target file based on the found file structure.

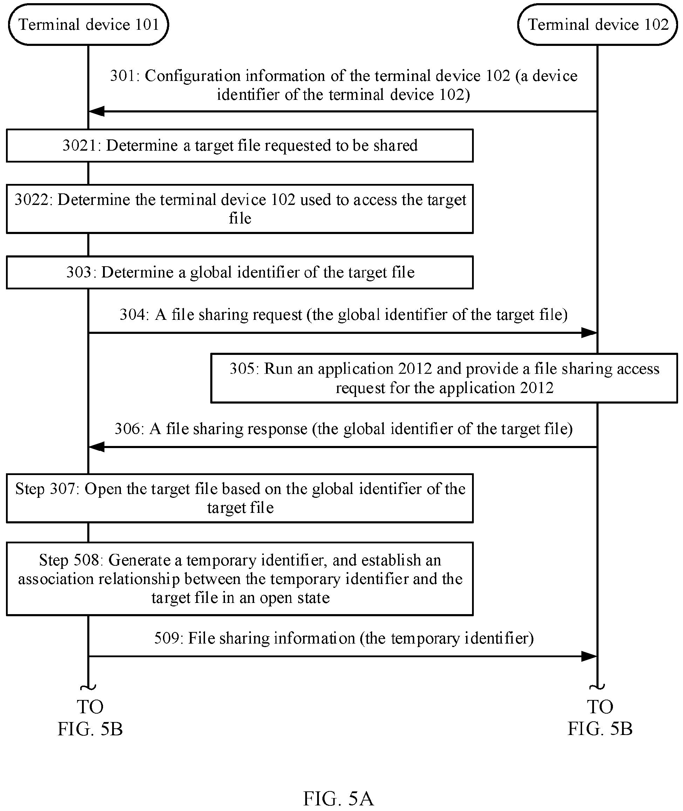

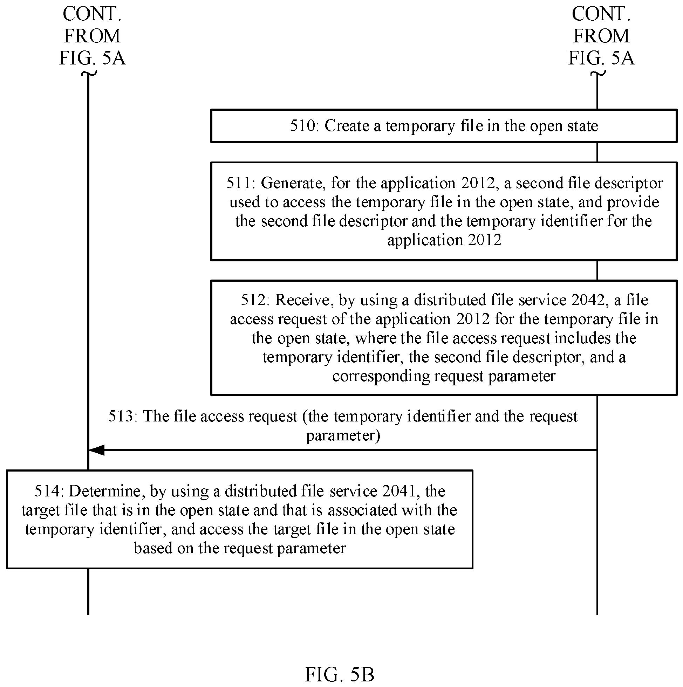

Based on the system framework shown in FIG. 2, an embodiment of this application further provides another file sharing method. As shown in FIG. 5A and FIG. 5B, the method may include but is not limited to some or all steps shown in FIG. 5A and FIG. 5B.

Different from the embodiment shown in FIG. 3A and FIG. 3B, after step 307, the terminal device 101 performs step 508 of generating a temporary identifier and establishing an association relationship between the temporary identifier and the target file in the open state.

Specifically, the file structure of the target file represents the target file in the open state. The temporary identifier is a unique identifier of the file structure of the target file in the terminal device 101. The association relationship between the temporary identifier and the file structure of the target file may be established, and the association relationship between the temporary identifier and the target file in the open state is established.

Then, the terminal device 101 performs step 509 of sending file sharing information to the terminal device 102.

The file sharing information includes at least the temporary identifier, and optionally includes the application identifier of the application 2012.

After receiving the file sharing information from the terminal device 101, the terminal device 102 performs step 510 of creating a temporary file in the open state by using the distributed file service 2042.

Specifically, the terminal device 101 may receive the file sharing information by using the file sharing apparatus 62. Then, the file sharing apparatus 62 may send the file open request to the distributed file service 2042. The file open request includes instruction information and a file identifier of a predetermined distributed file, and the indication information is used to indicate the distributed file service 2042 to create a nameless temporary file, that is, indicate the distributed file service to create a nameless file structure.

Then, the terminal device 102 performs step 511 of generating, for the application 2012, a second file descriptor used to access the temporary file in the open state, and providing the temporary identifier and the second file descriptor for the application 2012.

The terminal device 102 may generate, for the application 2012, the second file descriptor used to access the temporary file in the open state by using a method similar to the foregoing method for generating, for the distributed file service 2041, the first file descriptor used to access the target file in the open state. The predetermined distributed file may be a root directory of the distributed file system 10, or may be another distributed file in the distributed file system 10.

Then, the terminal device 102 performs step 512 of receiving, by using the distributed file service 2042, a file access request from the application 2012 for the temporary file in the open state.

The file access request includes the temporary identifier, the second file descriptor, and a corresponding request parameter.

Then, the terminal device 102 performs step 513 of sending the file access request to the terminal device 101 by using the distributed file service 2042. The file access request includes the temporary identifier and the corresponding request parameter.

After receiving the file access request from the distributed file service 2042 by using the distributed file service 2041, the terminal device 101 performs step 514 of determining, by using the distributed file service 2041, the target file that is in the open state and that is associated with the temporary identifier, and accessing the target file in the open state based on the request parameter.

Specifically, the distributed file service may determine the target file in the open state based on the established association relationship and based on the temporary identifier included in the file access request, that is, determine the file structure of the target file. Then, an interface function corresponding to a file access type in the system kernel is invoked based on the file access type included in the request parameter. The interface function is used to perform an access operation on the target file based on the file structure of the target file

In some embodiments, the system kernel of the terminal device 101 may further close the target file in the open state in response to a file close request of the application 2011 for the target file. That is, the file structure of the target file is deleted from the terminal device 101. As a result, the application 2012 cannot continue to perform cross-device access to the target file.

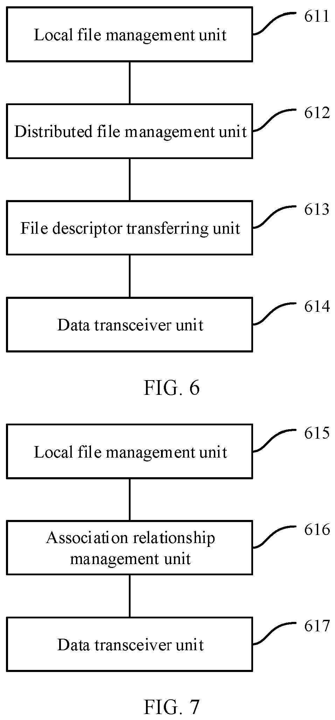

Based on a same concept as the foregoing method embodiments, an embodiment of this application further provides a file sharing apparatus. The apparatus may be used as the file sharing apparatus 61 and deployed in the terminal device 101 used as a first terminal device. As shown in FIG. 6, the apparatus may include: a local file management unit 611, configured to open a target file, where the target file is a local file that is stored in the first terminal device and that is to be shared with a second terminal device, and the first terminal device and the second terminal device belong to a same distributed file system; a distributed file management unit 612, configured to create, in the distributed file system, metadata of a mapping file corresponding to the target file, where the metadata of the mapping file includes a file identifier and an index identifier of the mapping file; a file descriptor transferring unit 613, configured to: generate, for a first distributed file service, a first file descriptor used to access the target file in an open state, and establish an association relationship between the first file descriptor and the index identifier; and a data sending unit 614, configured to send file sharing information to the second terminal device, where the file sharing information includes the file identifier.

Based on a same concept as the foregoing method embodiments, an embodiment of this application further provides another file sharing apparatus. The apparatus may be used as the file sharing apparatus 61 and deployed in the terminal device 101 used as a first terminal device. As shown in FIG. 7, the apparatus may include: a local file management unit 615, configured to open a target file, where the target file is a local file that is stored in the first terminal device and that is to be shared with a second terminal device, and the first terminal device and the second terminal device belong to a same distributed file system; an association relationship management unit 616, configured to generate a temporary identifier, and establish an association relationship between the temporary identifier and the target file in an open state; and a data transceiver unit 617, configured to send file sharing information to the second terminal device, where the file sharing information includes the temporary identifier.

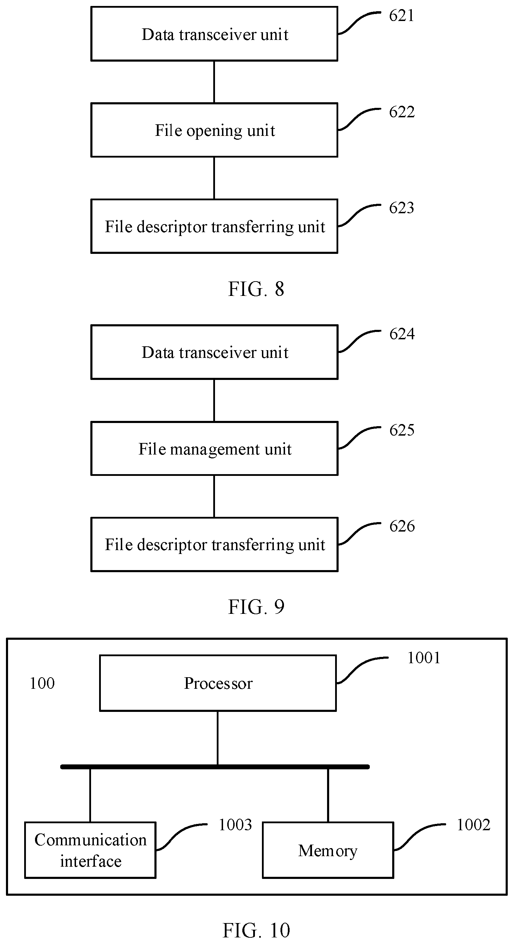

Based on a same concept as the foregoing method embodiments, an embodiment of this application further provides another file sharing apparatus. The apparatus may be used as the file sharing apparatus 62 and deployed in the terminal device 102 used as a second terminal device. As shown in FIG. 8, the apparatus includes: a data transceiver unit 621, configured to receive file sharing information from a first terminal device, where the first terminal device and the second terminal device belong to a same distributed file system, the file sharing information includes a file identifier of a mapping file that is in the distributed file system and that corresponds to a target file, and the target file is a local file that is stored in the first terminal device and that is to be shared with the second terminal device; a file opening unit 622, configured to open the mapping file based on the file identifier; and a file descriptor transferring unit 623, configured to generate, for a second application, a second file descriptor used to access the mapping file in an open state, and provide the second file descriptor for the second application.

Based on a same concept as the foregoing method embodiments, an embodiment of this application further provides another file sharing apparatus. The apparatus may be used as the file sharing apparatus 62 and deployed in the terminal device 102 used as a second terminal device. As shown in FIG. 9, the apparatus includes: a data transceiver unit 624, configured to receive file sharing information from a first terminal device, where the first terminal device and the second terminal device belong to a same distributed file system, the file sharing information includes a temporary identifier, an association relationship between the temporary identifier and a target file in an open state is established in the first terminal device, and the target file is a local file that is stored in the first terminal device and that is to be shared with the second terminal device; a file management unit 625, configured to create, in the second terminal device, a temporary file in the open state; and a file descriptor transferring unit 626, configured to generate, for a second application, a second file descriptor used to access the temporary file in the open state, and provide the second file descriptor and the temporary identifier for the second application.

In the foregoing aspects, the first distributed file service can send a metadata synchronization message to the second terminal device, where the metadata synchronization message includes metadata of the mapping file.

In the foregoing aspects, the first terminal device may further send a file sharing request to the second terminal device, where the file sharing request includes a global identifier of the target file, and the global identifier is a unique identifier of the target file in the first terminal device. The second terminal device can provide the file sharing request for the second application, and send a file sharing response including the global identifier to the second terminal device in response to a trigger operation performed by a user on the global identifier through the second application. Correspondingly, the first terminal device may open the target file in response to the file sharing response from the second terminal device. In this way, the user can access the target file on demand through the second application based on a service requirement of the user.

In the foregoing file sharing apparatuses, the file sharing request may further include a first application identifier of a first application. The first application is deployed in the first terminal device and has permission to access the target file, and the first application identifier is a unique identifier of the first application in the first terminal device. Correspondingly, the file sharing response may further include the first application identifier. The file sharing apparatus in the first terminal device may open the target file through the first application in response to the file sharing response that includes the global identifier and the first application identifier.

In the foregoing file sharing apparatuses, the global identifier of the target file includes an URI of the target file. The URI of the target file may specifically include a file information field. The file information field is a storage path of the target file or a mapping character string corresponding to the storage path.

In the foregoing file sharing apparatuses, the URI of the target file may further include a device information field. The device information field is a device identifier of the first terminal device or a mapping character string corresponding to the device identifier.

In the foregoing file sharing apparatuses, the URI of the target file further includes an application information field. The application information field specifically includes the first application identifier of the first application or a mapping character string corresponding to the first application identifier.

In the foregoing file sharing apparatuses, the file sharing request further includes a second application identifier of the second application. The second application is deployed in the second terminal device, and the second application identifier is a unique identifier of the second application in the second terminal device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application. Therefore, embodiments of this application further provide a terminal device and a computer-readable storage medium.

As shown in FIG. 10, a terminal device 100 may include a processor 1001, a memory 1002, and a communication interface 1003. The communication interface 1003 is used to communicate with another terminal device. The memory 1002 stores computer program instructions/code. When the processor 1001 executes the computer program instructions/code, the terminal device 100 is used as the terminal device 101 to implement the method performed by the terminal device 101 in the embodiment shown in FIG. 3A and FIG. 3B or FIG. 5A and FIG. 5B, or the terminal device 100 is used as the terminal device 102 to implement the method performed by the terminal device 102 in the embodiment shown in FIG. 3A and FIG. 3B or FIG. 5A and FIG. 5B.

The computer-readable storage medium is configured to store computer program instructions/code. When a processor of a terminal device executes the computer program instructions/code, the terminal device is used as the terminal device 101 to implement the method performed by the terminal device 101 in the embodiment shown in FIG. 3A and FIG. 3B or FIG. 5A and FIG. 5B, or the terminal device is used as the terminal device 102 to implement the method performed by the terminal device 102 in the embodiment shown in FIG. 3A and FIG. 3B or FIG. 5A and FIG. 5B.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed operating process of the foregoing terminal device, refer to a corresponding process in the foregoing method embodiments. Details are not described herein again.

It may be understood that the described apparatus embodiments are examples. For example, the module/unit division is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of embodiments of this application, but are not intended to limit the protection scope of embodiments of this application, which is defined by the appended claims.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions provided in the foregoing embodiments or make equivalent replacements to some technical features thereof, without departing from the scope of the technical solutions of embodiments of this application.

## Claims

1. A file sharing method, applied to a first terminal device, wherein a first distributed file service is deployed in the first terminal device, and the method comprises:
opening a target file (307), wherein the target file is a local file that is stored in the first terminal device and that is to be shared with a second terminal device, and the first terminal device and the second terminal device belong to a same distributed file system;
creating (3081), in the distributed file system, metadata of a mapping file corresponding to the target file, wherein the metadata of the mapping file comprises a file identifier and an index identifier of the mapping file;
generating (309), for the first distributed file service, a first file descriptor used to access the target file in an open state, and establishing an association relationship between the first file descriptor and the index identifier;
sending (310) file sharing information to the second terminal device, wherein the file sharing information comprises the file identifier; and
receiving (313) a first file access request from the second terminal device through the first distributed file service, wherein the first file access request comprises a request parameter and the index identifier; querying the association relationship based on the index identifier, to determine (314) the first file descriptor; and accessing the target file in the open state based on the request parameter and the first file descriptor.

2. The method according to claim 1, further comprising:
sending (3082) a metadata synchronization message to the second terminal device through the first distributed file service, wherein the metadata synchronization message comprises the metadata of the mapping file.

3. A file sharing method, applied to a first terminal device, wherein a first distributed file service is deployed in the first terminal device, and the method comprises:
opening a target file (307), wherein the target file is a local file that is stored in the first terminal device and that is to be shared with a second terminal device, and the first terminal device and the second terminal device belong to a same distributed file system;
generating (508) a unique identifier of the file structure of the target file in the terminal device, wherein the file structure of the target file represents the target file in an open state, and establishing an association relationship between the unique identifier and the target file in the open state;
sending (509) file sharing information to the second terminal device, wherein the file sharing information comprises the unique identifier; and
receiving (513) a first file access request from the second terminal device through the first distributed file service, wherein the first file access request comprises a request parameter and the unique identifier; querying the association relationship based on the unique identifier, to determine (514) the target file in the open state; and accessing the target file in the open state based on the request parameter.

4. The method according to any one of claims 1 to 3, further comprising:
sending (304) a file sharing request to the second terminal device, wherein the file sharing request comprises a global identifier of the target file, and the global identifier is a unique identifier of the target file in the first terminal device; and
the opening (307) a target file specifically comprises: opening the target file in response to a file sharing response (306) that is from the second terminal device and that comprises the global identifier.

5. The method according to claim 4, wherein
the file sharing request further comprises a first application identifier of a first application, wherein the first application is deployed in the first terminal device and has permission to access the target file, and the first application identifier is a unique identifier of the first application in the first terminal device; and
the opening the target file in response to a file sharing response that is from the second terminal device and that comprises the global identifier of the target file specifically comprises: opening the target file through the first application in response to the file sharing response that is from the second terminal device and that comprises the global identifier and the first application identifier.

6. The method according to claim 4, wherein
the global identifier of the target file comprises a uniform resource locator, URI of the target file, the URI of the target file specifically comprises a file information field, and the file information field is a storage path of the target file or a mapping character string corresponding to the storage path.

7. The method according to claim 6, wherein the URI of the target file further comprises:
a device information field, wherein the device information field specifically comprises a device identifier of the first terminal device or a mapping character string corresponding to the device identifier; and/or
an application information field, wherein the application information field specifically comprises a first application identifier of a first application or a mapping character string corresponding to the first application identifier.

8. A file sharing method, applied to a second terminal device, wherein a second distributed file service is deployed in the second terminal device, and the method comprises:
receiving (310) file sharing information from a first terminal device, wherein the first terminal device and the second terminal device belong to a same distributed file system, the file sharing information comprises a file identifier of a mapping file that is in the distributed file system and that corresponds to a target file, and the target file is a local file that is stored in the first terminal device and that is to be shared with the second terminal device;
opening (311) the mapping file based on the file identifier;
generating (311), for a second application, a second file descriptor used to access the mapping file in an open state, and providing the second file descriptor for the second application; and
receiving (312), through the second distributed file service, a second file access request of the second application for the mapping file in the open state, wherein the second file access request comprises a request parameter and the second file descriptor; and sending a first file access request to the first terminal device, wherein the first file access request comprises the request parameter and an index identifier of the mapping file, and the index identifier is obtained from metadata of the mapping file based on the file identifier.

9. The method according to claim 8, further comprising: receiving (3082) a metadata synchronization message from the first terminal device through the second distributed file service, wherein the metadata synchronization message comprises the metadata of the mapping file.

10. A file sharing method, applied to a second terminal device, wherein a second distributed file service is deployed in the second terminal device, and the method comprises:
receiving (509) file sharing information from a first terminal device, wherein the first terminal device and the second terminal device belong to a same distributed file system, the file sharing information comprises a unique identifier of a file structure of a target file in the first terminal device, wherein the file structure of the target file represents the target file in an open state, an association relationship between the unique identifier and the target file in the open state is established in the first terminal device, and the target file is a local file that is stored in the first terminal device and that is to be shared with the second terminal device;
creating (510), in the second terminal device, a nameless file structure in the open state;
generating (511), for a second application, a second file descriptor used to access the nameless file structure in the open state, and providing the second file descriptor and the unique identifier for the second application; and
receiving (512), through the second distributed file service, a second file access request of the second application for the nameless file structure in the open state, wherein the second file access request comprises the second file descriptor, the unique identifier, and a request parameter; and sending a first file access request to the first terminal device, wherein the first file access request comprises the request parameter and the unique identifier.

11. The method according to any one of claims 8 to 10, further comprising:
receiving (304) a file sharing request from the first terminal device, wherein the file sharing request comprises a global identifier of the target file, and the global identifier is a unique identifier of the target file in the first terminal device;
providing (305) the file sharing request for the second application; and
sending (306) a file sharing response to the second terminal device in response to a trigger operation performed by a user on the global identifier through the second application, wherein the file sharing response comprises the global identifier.

12. The method according to claim 11, wherein
the file sharing request further comprises a first application identifier of a first application, wherein the first application is deployed in the first terminal device and has permission to access the target file, and the first application identifier is a unique identifier of the first application in the first terminal device; and
the file sharing response further comprises the first application identifier.

13. The method according to claim 11, wherein
the global identifier of the target file comprises a uniform resource locator, URI of the target file, the URI of the target file specifically comprises a file information field, and the file information field is a storage path of the target file or a mapping character string corresponding to the storage path.

14. The method according to claim 13, wherein the URI of the target file further comprises:
a device information field, wherein the device information field specifically comprises a device identifier of the first terminal device or a mapping character string corresponding to the device identifier;
and/or
an application information field, wherein the application information field specifically comprises a first application identifier of a first application or a mapping character string corresponding to the first application identifier.

15. A computer-readable storage medium, configured to store computer program instructions/code, wherein when a processor of a terminal device executes the computer program instructions/code, the terminal device is enabled to implement the method according to any one of claims 1 to 7 or claims 8 to 14.

## Patentansprüche

1. Dateifreigabeverfahren, das auf ein erstes Endgerät angewendet wird, wobei ein erster verteilter Dateidienst in dem ersten Endgerät eingesetzt wird, und das Verfahren umfasst:
Öffnen einer Zieldatei (307), wobei die Zieldatei eine lokale Datei, die in dem ersten Endgerät gespeichert ist, ist und die mit einem zweiten Endgerät gemeinsam genutzt werden soll, und das erste Endgerät und das zweite Endgerät zu einem selben verteilten Dateisystem gehören;
Erstellen (3081), in dem verteilten Dateisystem, von Metadaten einer der Zieldatei entsprechenden Mapping-Datei, wobei die Metadaten der Mapping-Datei eine Dateikennung und eine Indexkennung der Mapping-Datei umfassen;
Erzeugen (309), für den ersten verteilten Dateidienst, eines ersten Dateideskriptors, der verwendet wird, um auf die Zieldatei in einem geöffneten Zustand zuzugreifen, und Herstellen einer Zuordnungsbeziehung zwischen dem ersten Dateideskriptor und der Indexkennung;
Senden (310) von Dateifreigabeinformationen an das zweite Endgerät, wobei die Dateifreigabeinformationen die Dateikennung umfassen; und
Empfangen (313) einer ersten Dateizugriffsanforderung von dem zweiten Endgerät über den ersten verteilten Dateidienst, wobei die erste Dateizugriffsanforderung einen Anforderungsparameter und die Indexkennung umfasst; Abfragen der Zuordnungsbeziehung basierend auf der Indexkennung, um den ersten Dateideskriptor zu bestimmen (314); und Zugreifen auf die Zieldatei in dem geöffneten Zustand basierend auf dem Anforderungsparameter und dem ersten Dateideskriptor.

2. Verfahren nach Anspruch 1, das ferner umfasst:
Senden (3082) einer Metadaten-Synchronisierungsnachricht an das zweite Endgerät über den ersten verteilten Dateidienst, wobei die Metadaten-Synchronisierungsnachricht die Metadaten der Mapping-Datei umfasst.

3. Dateifreigabeverfahren, das auf ein erstes Endgerät angewendet wird, wobei ein erster verteilter Dateidienst in dem ersten Endgerät eingesetzt wird, und das Verfahren umfasst:
Öffnen einer Zieldatei (307), wobei die Zieldatei eine lokale Datei, die in dem ersten Endgerät gespeichert ist, ist und die mit einem zweiten Endgerät gemeinsam genutzt werden soll, und das erste Endgerät und das zweite Endgerät zu einem selben verteilten Dateisystem gehören;
Erzeugen (508) einer eindeutigen Kennung der Dateistruktur der Zieldatei in dem Endgerät, wobei die Dateistruktur der Zieldatei die Zieldatei in einem geöffneten Zustand darstellt, und Herstellen einer Zuordnungsbeziehung zwischen der eindeutigen Kennung und der Zieldatei in dem geöffneten Zustand;
Senden (509) von Dateifreigabeinformationen an das zweite Endgerät, wobei die Dateifreigabeinformationen die eindeutige Kennung umfassen; und
Empfangen (513) einer ersten Dateizugriffsanforderung von dem zweiten Endgerät über den ersten verteilten Dateidienst,
wobei die erste Dateizugriffsanforderung einen Anforderungsparameter und die eindeutige Kennung umfasst; Abfragen der Zuordnungsbeziehung basierend auf der eindeutigen Kennung, um die Zieldatei in dem geöffneten Zustand zu bestimmen (514); und Zugreifen auf die Zieldatei in dem geöffneten Zustand basierend auf dem Anforderungsparameter.

4. Verfahren nach einem der Ansprüche 1 bis 3, das ferner umfasst:
Senden (304) einer Dateifreigabeanforderung an das zweite Endgerät, wobei die Dateifreigabeanforderung eine globale Kennung der Zieldatei umfasst, und die globale Kennung eine eindeutige Kennung der Zieldatei in dem ersten Endgerät ist; und
das Öffnen (307) einer Zieldatei spezifisch umfasst: Öffnen der Zieldatei als Reaktion auf eine Dateifreigabeantwort (306), die von dem zweiten Endgerät stammt und die die globale Kennung umfasst.

5. Verfahren nach Anspruch 4, wobei
die Dateifreigabeanforderung ferner eine erste Anwendungskennung einer ersten Anwendung umfasst, wobei die erste Anwendung in dem ersten Endgerät eingesetzt wird und eine Berechtigung, auf die Zieldatei zuzugreifen, aufweist, und die erste Anwendungskennung eine eindeutige Kennung der ersten Anwendung in dem ersten Endgerät ist; und
das Öffnen der Zieldatei als Reaktion auf eine Dateifreigabeantwort, die von dem zweiten Endgerät stammt und die die globale Kennung der Zieldatei umfasst, spezifisch umfasst: Öffnen der Zieldatei durch die erste Anwendung als Reaktion auf die Dateifreigabeantwort, die von dem zweiten Endgerät stammt und die die globale Kennung und die erste Anwendungskennung umfasst.

6. Verfahren nach Anspruch 4, wobei
die globale Kennung der Zieldatei einen Uniform Resource Locator, URI, der Zieldatei umfasst, der URI der Zieldatei spezifisch ein Dateiinformationsfeld umfasst, und das Dateiinformationsfeld ein Speicherpfad der Zieldatei oder eine dem Speicherpfad entsprechende Mapping-Zeichenfolge ist.

7. Verfahren nach Anspruch 6, wobei der URI der Zieldatei ferner umfasst:
ein Geräteinformationsfeld, wobei das Geräteinformationsfeld spezifisch eine Gerätekennung des ersten Endgeräts oder eine der Gerätekennung entsprechende Mapping-Zeichenfolge umfasst; und/oder
ein Anwendungsinformationsfeld, wobei das Anwendungsinformationsfeld spezifisch eine erste Anwendungskennung einer ersten Anwendung oder eine der ersten Anwendungskennung entsprechende Mapping-Zeichenfolge umfasst.

8. Dateifreigabeverfahren, das auf ein zweites Endgerät angewendet wird, wobei ein zweiter verteilter Dateidienst in dem zweiten Endgerät eingesetzt wird, und das Verfahren umfasst:
Empfangen (310) von Dateifreigabeinformationen von einem ersten Endgerät, wobei das erste Endgerät und das zweite Endgerät zu einem selben verteilten Dateisystem gehören, die Dateifreigabeinformationen eine Dateikennung einer Mapping-Datei umfassen, die sich in dem verteilten Dateisystem befindet und die einer Zieldatei entspricht, und die Zieldatei eine lokale Datei, die in dem ersten Endgerät gespeichert ist, ist und die mit dem zweiten Endgerät gemeinsam genutzt werden soll;
Öffnen (311) der Mapping-Datei basierend auf der Dateikennung;
Erzeugen (311), für eine zweite Anwendung, eines zweiten Dateideskriptors, der verwendet wird, um auf die Mapping-Datei in einem geöffneten Zustand zuzugreifen, und Bereitstellen des zweiten Dateideskriptors für die zweite Anwendung; und
Empfangen (312), über den zweiten verteilten Dateidienst, einer zweiten Dateizugriffsanforderung der zweiten Anwendung für die Mapping-Datei in dem geöffneten Zustand, wobei die zweite Dateizugriffsanforderung einen Anforderungsparameter und den zweiten Dateideskriptor umfasst; und Senden einer ersten Dateizugriffsanforderung an das erste Endgerät, wobei die erste Dateizugriffsanforderung den Anforderungsparameter und eine Indexkennung der Mapping-Datei umfasst, und die Indexkennung aus Metadaten der Mapping-Datei basierend auf der Dateikennung erhalten wird.

9. Verfahren nach Anspruch 8, das ferner umfasst: Empfangen (3082) einer Metadatensynchronisierungsnachricht von dem ersten Endgerät über den zweiten verteilten Dateidienst, wobei die Metadatensynchronisierungsnachricht die Metadaten der Mapping-Datei umfasst.

10. Dateifreigabeverfahren, das auf ein zweites Endgerät angewendet wird, wobei ein zweiter verteilter Dateidienst in dem zweiten Endgerät eingesetzt wird, und das Verfahren umfasst:
Empfangen (509) von Dateifreigabeinformationen von einem ersten Endgerät, wobei das erste Endgerät und das zweite Endgerät zu einem selben verteilten Dateisystem gehören, die Dateifreigabeinformationen eine eindeutige Kennung einer Dateistruktur einer Zieldatei in dem ersten Endgerät umfassen, wobei die Dateistruktur der Zieldatei die Zieldatei in einem offenen Zustand, in dem ersten Endgerät eine Zuordnungsbeziehung zwischen der eindeutigen Kennung und der Zieldatei in dem geöffneten Zustand hergestellt ist, darstellt und die Zieldatei eine lokale Datei, die in dem ersten Endgerät gespeichert ist, ist und die mit dem zweiten Endgerät gemeinsam genutzt werden soll;
Erstellen (510), in dem zweiten Endgerät, einer namenlosen Dateistruktur in dem geöffneten Zustand;
Erzeugen (511), für eine zweite Anwendung, eines zweiten Dateideskriptors, der verwendet wird, um auf die namenlose Dateistruktur in dem geöffneten Zustand zuzugreifen, und Bereitstellen des zweiten Dateideskriptors und der eindeutigen Kennung für die zweite Anwendung; und
Empfangen (512), über den zweiten verteilten Dateidienst, einer zweiten Dateizugriffsanforderung der zweiten Anwendung für die namenlose Dateistruktur in dem geöffneten Zustand, wobei die zweite Dateizugriffsanforderung den zweiten Dateideskriptor, die eindeutige Kennung und einen Anforderungsparameter umfasst;
und Senden einer ersten Dateizugriffsanforderung an das erste Endgerät, wobei die erste Dateizugriffsanforderung den Anforderungsparameter und die eindeutige Kennung umfasst.

11. Verfahren nach einem der Ansprüche 8 bis 10, das ferner umfasst:
Empfangen (304) einer Dateifreigabeanforderung von dem ersten Endgerät, wobei die Dateifreigabeanforderung eine globale Kennung der Zieldatei umfasst, und die globale Kennung eine eindeutige Kennung der Zieldatei in dem ersten Endgerät ist;
Bereitstellen (305) der Dateifreigabeanforderung für die zweite Anwendung; und
Senden (306) einer Dateifreigabeantwort an das zweite Endgerät als Reaktion auf eine Auslöseoperation, die durch einen Benutzer an der globalen Kennung über die zweite Anwendung durchgeführt wird, wobei die Dateifreigabeantwort die globale Kennung umfasst.

12. Verfahren nach Anspruch 11, wobei
die Dateifreigabeanforderung ferner eine erste Anwendungskennung einer ersten Anwendung umfasst, wobei die erste Anwendung in dem ersten Endgerät eingesetzt wird und die Berechtigung, auf die Zieldatei zuzugreifen, aufweist, und die erste Anwendungskennung eine eindeutige Kennung der ersten Anwendung in dem ersten Endgerät ist; und
die Dateifreigabeantwort ferner die erste Anwendungskennung umfasst.

13. Verfahren nach Anspruch 11, wobei
die globale Kennung der Zieldatei einen Uniform Resource Locator, URI, der Zieldatei umfasst, der URI der Zieldatei spezifisch ein Dateiinformationsfeld umfasst, und das Dateiinformationsfeld ein Speicherpfad der Zieldatei oder eine dem Speicherpfad entsprechende Mapping-Zeichenfolge ist.

14. Verfahren nach Anspruch 13, wobei der URI der Zieldatei ferner umfasst:
ein Geräteinformationsfeld, wobei das Geräteinformationsfeld spezifisch eine Gerätekennung des ersten Endgeräts oder eine der Gerätekennung entsprechende Mapping-Zeichenfolge umfasst;
und/oder
ein Anwendungsinformationsfeld, wobei das Anwendungsinformationsfeld spezifisch eine erste Anwendungskennung einer ersten Anwendung oder eine der ersten Anwendungskennung entsprechende Mapping-Zeichenfolge umfasst.

15. Computerlesbares Speichermedium, das konfiguriert ist, um Computerprogrammanweisungen/-code zu speichern, wobei, wenn ein Prozessor eines Endgeräts die Computerprogrammanweisungen/den Computerprogrammcode ausführt, das Endgerät befähigt wird, das Verfahren nach einem der Ansprüche 1 bis 7 oder der Ansprüche 8 bis 14 zu implementieren.

## Revendications

1. Procédé de partage de fichier, appliqué à un premier dispositif terminal, dans lequel un premier service de fichier distribué est déployé dans le premier dispositif terminal, et le procédé comprend :
l'ouverture d'un fichier cible (307), dans lequel le fichier cible est un fichier local qui est stocké dans le premier dispositif terminal et qui doit être partagé avec un second dispositif terminal, et le premier dispositif terminal et le second dispositif terminal appartiennent à un même système de fichier distribué ;
la création (3081), dans le système de fichier distribué, de métadonnées d'un fichier de mise en correspondance correspondant au fichier cible, dans lequel les métadonnées du fichier de mise en correspondance comprennent un identifiant de fichier et un identifiant d'index du fichier de mise en correspondance ;
la génération (309), pour le premier service de fichier distribué, d'un premier descripteur de fichier utilisé pour accéder au fichier cible dans un état ouvert, et l'établissement d'une relation d'association entre le premier descripteur de fichier et l'identifiant d'index ;
l'envoi (310) d'informations de partage de fichier au second dispositif terminal, dans lequel les informations de partage de fichier comprennent l'identifiant de fichier ; et
la réception (313) d'une première demande d'accès au fichier en provenance du second dispositif terminal par l'intermédiaire du premier service de fichier distribué,
dans lequel la première demande d'accès au fichier comprend un paramètre de demande et l'identifiant d'index ; l'interrogation de la relation d'association en fonction de l'identifiant d'index, pour déterminer (314) le premier descripteur de fichier ; et
l'accès au fichier cible dans l'état ouvert en fonction du paramètre de demande et du premier descripteur de fichier.

2. Procédé selon la revendication 1, comprenant en outre :
l'envoi (3082) d'un message de synchronisation de métadonnées au second dispositif terminal par l'intermédiaire du premier service de fichier distribué, dans lequel le message de synchronisation de métadonnées comprend le métadonnées du fichier de mise en correspondance.

3. Procédé de partage de fichier, appliqué à un premier dispositif terminal, dans lequel un premier service de fichier distribué est déployé dans le premier dispositif terminal, et le procédé comprend :
l'ouverture d'un fichier cible (307), dans lequel le fichier cible est un fichier local qui est stocké dans le premier dispositif terminal et qui doit être partagé avec un second dispositif terminal, et le premier dispositif terminal et le second dispositif terminal appartiennent à un même système de fichier distribué ;
la génération (508) d'un identifiant unique de la structure de fichier du fichier cible dans le dispositif terminal, dans lequel la structure de fichier du fichier cible représente le fichier cible dans un état ouvert, et l'établissement d'une relation d'association entre l'identifiant unique et le fichier cible dans l'état ouvert ;
l'envoi (509) d'informations de partage de fichier au second dispositif terminal, dans lequel les informations de partage de fichier comprennent l'identifiant unique ; et
la réception (513) d'une première demande d'accès au fichier en provenance du second dispositif terminal par l'intermédiaire du premier service de fichier distribué,
dans lequel la première demande d'accès au fichier comprend un paramètre de demande et l'identifiant unique ; l'interrogation de la relation d'association en fonction de l'identifiant unique, pour déterminer (514) le fichier cible dans l'état ouvert ; et
l'accès au fichier cible dans l'état ouvert en fonction du paramètre de demande.

4. Procédé selon l'une quelconque des revendications 1 à 3, comprenant en outre :
l'envoi (304) d'une demande de partage de fichier au second dispositif terminal, dans lequel la demande de partage de fichier comprend un identifiant global du fichier cible, et l'identifiant global est un identifiant unique du fichier cible dans le premier dispositif terminal ; et
l'ouverture (307) d'un fichier cible comprend spécifiquement : l'ouverture du fichier cible en réponse à une réponse de partage de fichier (306) qui provient du second dispositif terminal et qui comprend l'identifiant global.

5. Procédé selon la revendication 4, dans lequel
la demande de partage de fichier comprend en outre un identifiant de première application d'une première application, dans lequel la première application est déployée dans le premier dispositif terminal et a l'autorisation d'accéder au fichier cible, et l'identifiant de première application est un identifiant unique de la première application dans le premier dispositif terminal ; et
l'ouverture du fichier cible en réponse à une réponse de partage de fichier qui provient du second dispositif terminal et qui comprend l'identifiant global du fichier cible comprend spécifiquement : l'ouverture du fichier cible par l'intermédiaire de la première application en réponse à la réponse de partage de fichier qui provient du second dispositif terminal et qui comprend l'identifiant global et l'identifiant de première application.

6. Procédé selon la revendication 4, dans lequel
l'identifiant global du fichier cible comprend un localisateur uniforme de ressource, URI, du fichier cible, l'URI du fichier cible comprend spécifiquement un champ d'informations de fichier, et le champ d'informations de fichier est un chemin de stockage du fichier cible ou une chaîne de caractères de mise en correspondance correspondant au chemin de stockage.

7. Procédé selon la revendication 6, dans lequel l'URI du fichier cible comprend en outre :
un champ d'informations de dispositif, dans lequel le champ d'informations de dispositif comprend spécifiquement un identifiant de dispositif du premier dispositif terminal ou une chaîne de caractères de mise en correspondance correspondant à l'identifiant de dispositif ; et/ou
un champ d'informations d'application, dans lequel le champ d'informations d'application comprend spécifiquement un identifiant de première application d'une première application ou une chaîne de caractères de mise en correspondance correspondant à l'identifiant de première application.

8. Procédé de partage de fichier, appliqué à un second dispositif terminal, dans lequel un second service de fichier distribué est déployé dans le second dispositif terminal, et le procédé comprend :
la réception (310) d'informations de partage de fichier en provenance d'un premier dispositif terminal, dans lequel le premier dispositif terminal et le second dispositif terminal appartiennent à un même système de fichier distribué, les informations de partage de fichier comprennent un identifiant de fichier d'un fichier de mise en correspondance qui se trouve dans le système de fichier distribué et qui correspond à un fichier cible, et le fichier cible est un fichier local qui est stocké dans le premier dispositif terminal et qui doit être partagé avec le second dispositif terminal ;
l'ouverture (311) du fichier de mise en correspondance en fonction de l'identifiant de fichier ;
la génération (311), pour une seconde application, d'un second descripteur de fichier utilisé pour accéder au fichier de mise en correspondance dans un état ouvert, et la fourniture du second descripteur de fichier pour la seconde application ; et
la réception (312), par l'intermédiaire du second service de fichier distribués, d'une seconde demande d'accès au fichier de la seconde application pour le fichier de mise en correspondance dans l'état ouvert, dans lequel la seconde demande d'accès au fichier comprend un paramètre de demande et le second descripteur de fichier ; et l'envoi d'une première demande d'accès au fichier au premier dispositif terminal, dans lequel la première demande d'accès au fichier comprend le paramètre de demande et un identifiant d'index du fichier de mise en correspondance, et l'identifiant d'index est obtenu à partir de métadonnées du fichier de mise en correspondance en fonction de l'identifiant de fichier.

9. Procédé selon la revendication 8, comprenant en outre : la réception (3082) d'un message de synchronisation de métadonnées en provenance du premier dispositif terminal par l'intermédiaire du second service de fichier distribué, dans lequel le message de synchronisation de métadonnées comprend les métadonnées du fichier de mise en correspondance.

10. Procédé de partage de fichier, appliqué à un second dispositif terminal, dans lequel un second service de fichier distribué est déployé dans le second dispositif terminal, et le procédé comprend :
la réception (509) d'informations de partage de fichier en provenance d'un premier dispositif terminal, dans lequel le premier dispositif terminal et le second dispositif terminal appartiennent à un même système de fichier distribué, les informations de partage de fichier comprennent un identifiant unique d'une structure de fichier d'un fichier cible dans le premier dispositif terminal, dans lequel la structure de fichier du fichier cible représente le fichier cible dans un état ouvert, une relation d'association entre l'identifiant unique et le fichier cible dans l'état ouvert est établie dans le premier dispositif terminal, et le fichier cible est un fichier local qui est stocké dans le premier dispositif terminal et qui doit être partagé avec le second dispositif terminal ;
la création (510), dans le second dispositif terminal, d'une structure de fichier sans nom dans l'état ouvert ;
la génération (511), pour une seconde application, d'un second descripteur de fichier utilisé pour accéder à la structure de fichier sans nom dans l'état ouvert, et la fourniture du second descripteur de fichier et de l'identifiant unique pour la seconde application ; et
la réception (512), par l'intermédiaire du second service de fichier distribué, d'une seconde demande d'accès au fichier de la seconde application pour la structure de fichier sans nom dans l'état ouvert, dans lequel la seconde demande d'accès au fichier comprend le second descripteur de fichier, l'identifiant unique, et un paramètre de demande ; et l'envoi d'une première demande d'accès au fichier au premier dispositif terminal, dans lequel la première demande d'accès au fichier comprend le paramètre de demande et l'identifiant unique.

11. Procédé selon l'une quelconque des revendications 8 à 10, comprenant en outre :
la réception (304) d'une demande de partage de fichier en provenance du premier dispositif terminal, dans lequel la demande de partage de fichier comprend un identifiant global du fichier cible, et l'identifiant global est un identifiant unique du fichier cible dans le premier dispositif terminal ;
la fourniture (305) de la demande de partage de fichier pour la seconde application ; et
l'envoi (306) d'une réponse de partage de fichier au second dispositif terminal en réponse à une opération de déclenchement effectuée par un utilisateur sur l'identifiant global par l'intermédiaire de la seconde application, dans lequel la réponse de partage de fichier comprend l'identifiant global.

12. Procédé selon la revendication 11, dans lequel
la demande de partage de fichier comprend en outre un identifiant de première application d'une première application, dans lequel la première application est déployée dans le premier dispositif terminal et a l'autorisation d'accéder au fichier cible, et l'identifiant de première application est un identifiant unique de la première application dans le premier dispositif terminal ; et
la réponse de partage de fichier comprend en outre l'identifiant de première application.

13. Procédé selon la revendication 11, dans lequel
l'identifiant global du fichier cible comprend un localisateur uniforme de ressource, URI, du fichier cible, l'URI du fichier cible comprend spécifiquement un champ d'informations de fichier, et le champ d'informations de fichier est un chemin de stockage du fichier cible ou une chaîne de caractères de mise en correspondance correspondant au chemin de stockage.

14. Procédé selon la revendication 13, dans lequel l'URI du fichier cible comprend en outre :
un champ d'informations de dispositif, dans lequel le champ d'informations de dispositif comprend spécifiquement un identifiant de dispositif du premier dispositif terminal ou une chaîne de caractères de mise en correspondance correspondant à l'identifiant de dispositif ;
et/ou
un champ d'informations d'application, dans lequel le champ d'informations d'application comprend spécifiquement un identifiant de première application d'une première application ou une chaîne de caractères de mise en correspondance correspondant à l'identifiant de première application.

15. Support de stockage lisible par ordinateur, configuré pour stocker des instructions/un code de programme informatique, dans lequel, lorsqu'un processeur d'un dispositif terminal exécute les instructions/le code de programme informatique, le dispositif terminal est en mesure de mettre en œuvre le procédé selon l'une quelconque des revendications 1 à 7 ou des revendications 8 à 14.
